(19) Europäisches Patentamt

European Patent Office

Office européen des brevets

(11) **EP 4 588 685 A1**

(12) **EUROPEAN PATENT APPLICATION**
published in accordance with Art. 153(4) EPC

(43) Date of publication:
**23.07.2025 Bulletin 2025/30**

(21) Application number: **23865600.3**

(22) Date of filing: **14.09.2023**

(51) International Patent Classification (IPC):
***B41M 5/00*** (2006.01)          ***B41J 2/01*** (2006.01)

(52) Cooperative Patent Classification (CPC):
**B41J 2/01; B41M 5/00**

(86) International application number:
**PCT/JP2023/033595**

(87) International publication number:
**WO 2024/058251 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 JP 2022148465**

(71) Applicant: **FUJIFILM Corporation
Tokyo 106-8620 (JP)**

(72) Inventors:
• **SATO, Ayato
Ashigarakami-gun, Kanagawa 258-8577 (JP)**
• **IKOSHI, Masao
Ashigarakami-gun, Kanagawa 258-8577 (JP)**

(74) Representative: **Klunker IP
Patentanwälte PartG mbB
Destouchesstraße 68
80796 München (DE)**

(54)    **INKJET RECORDING METHOD**

(57)    Provided is an ink jet recording method including a step of applying, onto a non-permeable substrate, a pretreatment liquid which contains water, a coagulating agent having a molecular weight of 1000 or less, and a resin; a pretreatment liquid drying step; a step of applying, onto the non-permeable substrate onto which the pretreatment liquid has been applied, a first ink which contains water and a colorant by an ink jet recording system; a step of drying the first ink under drying conditions of a wind speed of V meters/sec, a drying temperature of T°C, and a drying time of t seconds; and a second ink applying step, in which, in a case where a content of the coagulating agent with respect to a total amount of the pretreatment liquid is indicated by M% by mass and a content of the resin with respect to the total amount of the pretreatment liquid is indicated by P% by mass, V, T, t, M, and P satisfy the following expressions (1) and (2).

$$3500 \geq 50V + TtM/P \geq 700 \ldots (1)$$

$$120 \geq T \geq 25 \ldots (2)$$

FIG. 1

EP 4 588 685 A1

**Description**

BACKGROUND OF THE INVENTION

1. Field of the Invention

The present disclosure relates to an ink jet recording method.

2. Description of the Related Art

In the related art, various studies have been conducted on an ink jet ink and an ink jet recording method.

For example, JP2019-177553A discloses a liquid jetting method using a line head method, the liquid jetting method including a treatment liquid applying step of applying a treatment liquid onto a non-permeable substrate, a first jetting step of jetting a first ink containing an organic solvent to the non-permeable substrate onto which the treatment liquid has been applied, a first heating step of heating the non-permeable substrate onto which the first ink has been jetted with infrared rays, and a second jetting step of jetting a second ink containing an organic solvent to the heated non-permeable substrate, in which a content ratio of the organic solvent contained in the first ink is higher than a content ratio of the organic solvent contained in the second ink.

JP2021-4368A discloses an ink set containing a reaction solution containing a coagulating agent, a first ink containing a coloring material, and a second ink containing a coloring material, in which the ink set is used for recording on a non-absorptive recording medium or a low-absorptive recording medium, and the ink set is used by applying the reaction solution, the first ink, and the second ink to the recording medium such that the reaction solution, the first ink, and the second ink are superimposed thereon in this order.

SUMMARY OF THE INVENTION

However, in the related art, it has been difficult to achieve both continuous jetting property of an ink in the ink jet recording system and blocking resistance of an image in an image recorded material obtained by the ink jet recording method.

The present disclosure has been made in view of such circumstances, and an object to be achieved by an embodiment of the present invention is to provide an ink jet recording method which has excellent continuous jetting property of an ink and is capable of recording an image with excellent blocking resistance.

The present disclosure includes the following aspects.

<1> An ink jet recording method comprising:

a step of applying, onto a non-permeable substrate, a pretreatment liquid which contains water, a coagulating agent having a molecular weight of 1000 or less, and a resin;
a step of drying the pretreatment liquid;
a step of applying, onto the non-permeable substrate onto which the pretreatment liquid has been applied, a first ink which contains water and a colorant by an ink jet recording system;
a step of drying the first ink under drying conditions of a wind speed of V meters/sec, a drying temperature of T°C, and a drying time of t seconds; and
a step of applying, onto the non-permeable substrate onto which the pretreatment liquid and the first ink have been applied, a second ink containing water and a colorant by an ink jet recording system,
in which, in a case where a content of the coagulating agent with respect to a total amount of the pretreatment liquid is indicated by M% by mass and a content of the resin with respect to the total amount of the pretreatment liquid is indicated by P% by mass, V, T, t, M, and P satisfy the following expressions (1) and (2),

$$3500 \geq 50V + TtM/P \geq 700 \ \ldots \ (1),$$

$$120 \geq T \geq 25 \ \ldots \ (2).$$

<2> The ink jet recording method according to <1>,
in which V, T, t, M, and P satisfy the following expression (1A),

$$3000 \geq 50V + TtM/P \geq 1000 \text{ ... (1A)}.$$

<3> The ink jet recording method according to <1> or <2>,

in which, in the step of drying the pretreatment liquid, the pretreatment liquid is dried under drying conditions of a wind speed of $V^p$ meters/sec, a drying temperature of $T^p°C$, and a drying time of $t^p$ seconds, and V, T, t, M, P, $V^p$, $T^p$, and $t^p$ satisfy the following expression (3),

$$3500 \geq 20V^p + 50V + (Tt + T^p t^p)M/P \geq 1500 \text{ ... (3)}.$$

<4> The ink jet recording method according to any one of <1> to <3>,
in which, in a case where a tension of the non-permeable substrate is indicated by S (N/m), V, T, t, M, P, and S satisfy the following expression (4),

$$50 \geq (50V + TtM/P)/S \geq 15 \text{ ... (4)}.$$

<5> The ink jet recording method according to any one of <1> to <4>,
in which an amount of the coagulating agent applied onto the non-permeable substrate is 0.03 g/m$^2$ to 0.15 g/m$^2$.
<6> The ink jet recording method according to any one of <1> to <5>,
in which, in a case where a glass transition temperature of the resin contained in the pretreatment liquid is indicated by Tg°C, T, t, and Tg satisfy the following expression (5),

$$1500 \geq (T - Tg)t \geq 200 \text{ ... (5)}.$$

According to the present disclosure, it is possible to provide an ink jet recording method which has excellent continuous jetting property of an ink and is capable of recording an image with excellent blocking resistance.

BRIEF DESCRIPTION OF THE DRAWINGS

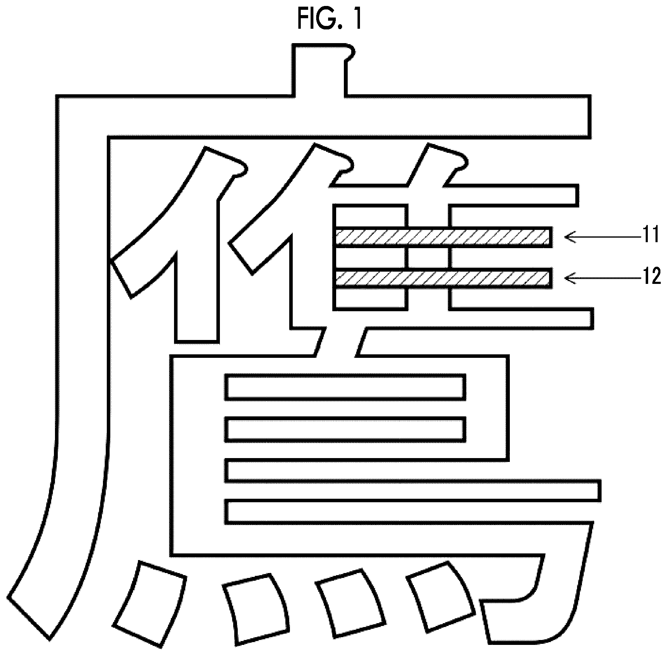

Fig. 1 is a diagram for describing details of an evaluation standard of image quality in Examples.

DESCRIPTION OF THE PREFERRED EMBODIMENTS

In the present disclosure, the numerical ranges shown using "to" means ranges including the numerical values described before and after "to" as the minimum value and the maximum value.
In the present disclosure, in a case in which a plurality of substances corresponding to respective components in a composition are present, the amount of the respective components in the composition means the total amount of the plurality of substances present in the composition unless otherwise specified.
In a numerical range described in a stepwise manner in the present disclosure, an upper limit value or a lower limit value described in a certain numerical range may be replaced with an upper limit value or a lower limit value in another numerical range described in a stepwise manner, or may be replaced with values shown in Examples.
In the present disclosure, a term "step" includes not only an independent step but also a step whose intended purpose is achieved even in a case in which the step is not clearly distinguished from other steps.
In the present disclosure, a concept of "image" includes not only a pattern image (for example, a character, a symbol, or a figure) but also a solid image.
In the present disclosure, "(meth)acrylic acid" is a concept including both acrylic acid and methacrylic acid.

[Ink jet recording method]

The ink jet recording method according to the present disclosure includes a step of applying, onto a non-permeable substrate, a pretreatment liquid which contains water, a coagulating agent having a molecular weight of 1000 or less, and a resin (hereinafter, also referred to as "pretreatment liquid applying step"); a step of drying the pretreatment liquid (hereinafter, also referred to as "pretreatment liquid drying step"); a step of applying, onto the non-permeable substrate onto which the pretreatment liquid has been applied, a first ink which contains water and a colorant by an ink jet recording system (hereinafter, also referred to as "first ink applying step"); a step of drying the first ink under drying conditions of a wind speed of V meters/sec, a drying temperature of T°C, and a drying time of t seconds (hereinafter, also referred to as "first ink drying step"); and a step of applying, onto the non-permeable substrate onto which the pretreatment liquid and the first ink have been applied, a second ink containing water and a colorant by an ink jet recording system (hereinafter, also referred to as "second ink applying step"), in which, in a case where a content of the coagulating agent with respect to a total amount of the pretreatment liquid is indicated by M% by mass and a content of the resin with respect to the total amount of the pretreatment liquid is indicated by P% by mass, V, T, t, M, and P satisfy the following expressions (1) and (2).

$$3500 \geq 50V + TtM/P \geq 700 \ ... \ (1)$$

$$120 \geq T \geq 25 \ ... \ (2)$$

With the ink jet recording method according to the present disclosure, continuous jetting property of an ink is excellent, and an image having excellent blocking resistance is obtained. The reason why such an effect is exhibited is presumed as follows.

In the ink jet recording method according to the present disclosure, the pretreatment liquid, the first ink, and the second ink are applied in this order onto the non-permeable substrate. In the related art, in a form in which the pretreatment liquid, the first ink, and the second ink are applied, continuous jetting property of the second ink tends to be particularly decreased. It is considered that this is because the coagulating agent contained in the pretreatment liquid is likely to scatter in the step of drying the first ink, and the scattered coagulating agent adheres to a nozzle for applying the second ink. In particular, it is found that, in a case where the non-permeable substrate is used, the coagulating agent tends to scatter more easily than a case where a permeable substrate is used.

In addition, in the form in which the pretreatment liquid, the first ink, and the second ink are applied as in the related art, in a case where the drying is insufficient, an image to be obtained tends to be deteriorated in blocking resistance. However, in a case where the drying is simply strengthened, since the coagulating agent is likely to scatter, it is difficult to achieve both continuous jetting property and blocking resistance of the image to be obtained.

On the other hand, the present inventors have focused on the wind speed, the temperature, and the drying time in the first ink drying step, the content of the coagulating agent with respect to the total amount of the pretreatment liquid, and the content of the resin with respect to the total amount of the pretreatment liquid, and have found that the continuous jetting property and the blocking resistance of the image to be obtained can be achieved by satisfying the above expression (1) and expression (2).

In JP2019-177553A and JP2021-4368A, specific conditions in the first ink drying step are not focused on.

Hereinafter, the expression (1) and the expression (2) in the present disclosure will be described.

<Expression (1) and expression (2)>

In the first ink drying step of the ink jet recording method according to the present disclosure, in a case where a wind speed is indicated by V meters/sec, a drying temperature is indicated by T°C, a drying time is indicated by t seconds, a content of a coagulating agent with respect to the total amount of the pretreatment liquid is indicated by M% by mass, and a content of a resin with respect to the total amount of the pretreatment liquid is indicated by P% by mass, V, T, t, M, and P satisfy the expression (1) and the expression (2).

$$3500 \geq 50V + TtM/P \geq 700 \ ... \ (1)$$

$$120 \geq T \geq 25 \ ... \ (2)$$

V, T, and t in the expression (1) are parameters related to the first ink drying step, and as the values are larger, a drying intensity is stronger. In addition, "M/P" in the expression (1) is a ratio of the content of the coagulating agent to the content of the resin contained in the pretreatment liquid. As the value of "M/P" is larger, that is, as the content of the coagulating agent is higher with respect to the content of the resin, the drying is easily carried out. In a case where the value calculated by "50V + TtM/P" is 3,500 or less, the scattering of the coagulating agent is suppressed, and the continuous jetting property of the second ink is excellent. On the other hand, in a case where the value calculated by "50V + TtM/P" is 700 or more, the pretreatment liquid and the first ink are appropriately dried, and the blocking resistance is excellent.

The first drying step may include a plurality of drying steps in which at least one of the wind speed, the drying temperature, or the drying time is different from each other. For example, in a case where the first drying step includes n stages of drying steps, the wind speeds in the first to n-th drying steps are denoted by $V_1$, $V_2$, ..., and $V_n$; the drying temperatures in the first to n-th drying steps are denoted by $T_1$, $T_2$, ..., and $T_n$; and the drying times in the first to n-th drying steps are denoted by $t_1$, $t_2$, ..., and $t_n$.

V, T, and t in the expression (1) are calculated by the following equations. i is 1 to n.

$$V = \Sigma(V_i t_i)/\Sigma(t_i)$$

$$T = \Sigma(T_i t_i)/\Sigma(t_i)$$

$$t = \Sigma(t_i)$$

For example, in a case where the first drying step is a two-stage drying step, V, T, and t in the expression (1) are calculated by the following equations.

$$V = (V_1 t_1 + V_2 t_2)/(t_1 + t_2)$$

$$T = (T_1 t_1 + T_2 t_2)/(t_1 + t_2)$$

$$t = t_1 + t_2$$

From the viewpoint of further improving the continuous jetting property, the upper limit value of "50V + TtM/P" is preferably 3,000. On the other hand, from the viewpoint of further improving the blocking resistance, the lower limit value of "50V + TtM/P" is preferably 1,000.

Therefore, from the viewpoint of further improving the continuous jetting property and the blocking resistance, it is preferable that V, T, t, M, and P satisfy the expression (1A).

$$3000 \geq 50V + TtM/P \geq 1000 \ ... \ (1A)$$

V, T, t, M, and P are not particularly limited as long as they can satisfy the expression (1) and the expression (2), and preferred ranges thereof are shown below.

[V]

The wind speed in the first ink drying step is preferably 5 meters/sec to 50 meters/sec and more preferably 10 meters/sec to 30 meters/sec.

In the present disclosure, the wind speed in the first ink drying step is measured at a position of the non-permeable substrate using a high wind speed thermal type wind speed meter (product name "M261-NTS-TA200S", manufactured by Shiro Industry Co.).

[T]

The drying temperature in the first ink drying step is 25°C to 120°C, preferably 40°C to 100°C and more preferably 60°C to 80°C.

In the present disclosure, the drying temperature in the first ink drying step is measured at a position of the non-permeable substrate using a high wind speed thermal type wind speed meter (product name "M261-NTS-TA200S", manufactured by Shiro Industry Co.).

[t]

The drying time in the first ink drying step is preferably 5 seconds to 40 seconds and more preferably 10 seconds to 25 seconds.

[M]

The content of the coagulating agent is preferably 2% by mass to 15% by mass and more preferably 5% by mass to 10% by mass with respect to the total amount of the pretreatment liquid.

[P]

The content of the resin is preferably 2% by mass to 15% by mass and more preferably 5% by mass to 10% by mass with respect to the total amount of the pretreatment liquid.

<Expression (3)>

In the pretreatment liquid drying step of the ink jet recording method according to the present disclosure, it is preferable that the pretreatment liquid is dried under drying conditions of a wind speed of $V^p$ meters/sec, a drying temperature of $T^p$°C, and a drying time of $t^p$ seconds, and V, T, t, M, P, $V^p$, $T^p$, and $t^p$ satisfy the following expression (3).

$$3500 \geq 20V^p + 50V + (Tt + T^p t^p)M/P \geq 1500 \ ... \ (3)$$

$V^p$, $T^p$, and $t^p$ in the expression (3) are parameters related to the pretreatment liquid drying step, and as the values are larger, a drying intensity is stronger. In a case where the value calculated by "$20V^p + 50V + (Tt + T^p t^p)M/P$" is 3,500 or less, the scattering of the coagulating agent is suppressed, and the continuous jetting property of the second ink is excellent. On the other hand, in a case where the value calculated by "$20V^p + 50V + (Tt + T^p t^p)M/P$" is 1,500 or more, the pretreatment liquid and the first ink are appropriately dried, and the blocking resistance is excellent.

The pretreatment liquid drying step may include a plurality of drying steps in which at least one of the wind speed, the drying temperature, or the drying time is different from each other. For example, in a case where the pretreatment liquid drying step includes n stages of drying steps, the wind speeds in the first to n-th drying steps are denoted by $V^p_1$, $V^p_2$, ..., and $V^p_n$; the drying temperatures in the first to n-th drying steps are denoted by $T^p_1$, $T^p_2$, ..., and $T^p_n$; and the drying times in the first to n-th drying steps are denoted by $t^p_1$, $t^p_2$, ..., and $t^p_n$.

$V^p$, $T^p$, and $t^p$ in the expression (3) are calculated by the following equations. i is 1 to n.

$$V^p = \Sigma(V^p_i t_i)/\Sigma(t^p_i)$$

$$T^p = \Sigma(T^p_i t_i)/\Sigma(t^p_i)$$

$$t^p = \Sigma(t^p_i)$$

For example, in a case where the first drying step is a two-stage drying step, $V^p$, $T^p$, and $t^p$ in the expression (3) are calculated by the following equations.

$$V^p = (V^p_1 t^p_1 + V^p_2 t^p_2)/(t^p_1 + t^p_2)$$

$$T^p = (T^p_1 t^p_1 + T^p_2 t^p_2)/(t^p_1 + t^p_2)$$

$$t^p = t^p_1 + t^p_2$$

$V^p$, $T^p$, and $t^p$ are not particularly limited as long as they can satisfy the expression (3), and preferred ranges thereof are shown below.

[$V^p$]

The wind speed in the pretreatment liquid drying step is preferably 5 meters/sec to 20 meters/sec and more preferably 10 meters/sec to 20 meters/sec.
In the present disclosure, the wind speed in the pretreatment liquid drying step is measured at a position of the non-permeable substrate using a high wind speed thermal type wind speed meter (product name "M261-NTS-TA200S", manufactured by Shiro Industry Co.).

[$T^p$]

The drying temperature in the pretreatment liquid drying step is preferably 25°C to 100°C and more preferably 60°C to 80°C.

In the present disclosure, the drying temperature in the pretreatment liquid drying step is measured at a position of the non-permeable substrate using a high wind speed thermal type wind speed meter (product name "M261-NTS-TA200S", manufactured by Shiro Industry Co.).

[t$^p$]

The drying time in the pretreatment liquid drying step is preferably 0.5 seconds to 5 seconds and more preferably 1 second to 3 seconds.

<Expression (4)>

In the ink jet recording method according to the present disclosure, in a case where a tension of the non-permeable substrate is indicated by S (N/m), it is preferable that V, T, t, M, P, and S satisfy the expression (4).

$$50 \geq (50V + \text{TtM/P})/S \geq 15 \ ... \ (4)$$

In the present disclosure, the tension of the non-permeable substrate means a tension of the non-permeable substrate at the time of applying the pretreatment liquid. From the viewpoint of suppressing occurrence of wrinkles, sagging, and the like in the non-permeable substrate, it is preferable that the tension of the non-permeable substrate in the pretreatment liquid applying step, the pretreatment liquid drying step, the first ink applying step, the first ink drying step, and the second ink applying step is constant.

In the ink jet recording method according to the present disclosure, it is preferable that each step is performed while a long non-permeable substrate is transported.

In a case of transporting a long non-permeable substrate, the tension can be adjusted by a tension control unit of a transport device for transporting the non-permeable substrate.

From the viewpoint of suppressing the occurrence of wrinkles, sagging, and the like in the non-permeable substrate, it is preferable that the tension of the non-permeable substrate is set according to the material, the thickness, and the like of the non-permeable substrate.

In a case where the value calculated by "(50V + TtM/P)S" is 15 or greater, a pressure on the non-permeable substrate is reduced in a case of winding the non-permeable substrate after image recording, and the blocking resistance is excellent. On the other hand, in a case where the value calculated by "(50 V + TtM/P) S" is 50 or less, fluttering of the non-permeable substrate is suppressed, and accordingly, the scattering of the coagulating agent is suppressed, and thus the continuous jetting property of the second ink is improved.

S is not particularly limited as long as they can satisfy the expression (4), and a preferred range thereof is shown below.

[S]

The tension of the non-permeable substrate is preferably 40 N/m to 120 N/m and more preferably 60 N/m to 100 N/m.

<Expression (5)>

In the ink jet recording method according to the present disclosure, in a case where a glass transition temperature of the resin contained in the pretreatment liquid is indicated by it is preferable that T, t, and Tg satisfy the expression (5).

$$1500 \geq (T - \text{Tg})t \geq 200 \ ... \ (5)$$

In the present disclosure, the glass transition temperature of the resin is an actually measured value.

Specifically, the glass transition temperature of the resin is a value measured under normal measurement conditions using a differential scanning calorimeter (DSC) EXSTAR 6220 manufactured by SII NanoTechnology Inc. Here, in a case where the measurement is difficult to perform due to decomposition or the like of the resin, a calculated value which is calculated by the following calculation formula is employed. The calculated value (Tg) is calculated by the expression (A).

$$1/Tg = \Sigma(Xi/Tgi) \ldots (A)$$

Here, it is assumed that the resin as a target for calculation is formed by copolymerizing n kinds of monomer components, in which i represents 1 to n. Xi represents a mass fraction ($\Sigma Xi = 1$) of the i-th monomer, and Tgi represents a glass transition temperature (absolute temperature) of a homopolymer of the i-th monomer. Here, $\Sigma$ is the sum of i = 1 to n. As the value (Tgi) of the glass transition temperature of the homopolymer of each monomer, the value of Polymer Handbook (3rd Edition) (J. Brandrup, E. H. Immergut (Wiley-Interscience, 1989)) is adopted.

In a case where the value calculated by "(T - Tg)t" is 200 or more, the scattering of the coagulating agent is suppressed by the resin contained in the pretreatment liquid, and the continuous jetting property of the second ink is improved. On the other hand, in a case where the value calculated by "(T - Tg)t" is 1,500 or less, the blocking resistance is improved.

Hereinafter, each step of the ink jet recording method according to the present disclosure will be described.

<Pretreatment liquid applying step>

In the pretreatment liquid applying step, a pretreatment liquid containing water, a coagulating agent having a molecular weight of 1,000 or less, and a resin is applied onto a non-permeable substrate.

(Non-permeable substrate)

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of a material of the non-permeable substrate include glass, a metal (such as aluminum, zinc, and copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, and an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of impermeable fibers, in addition to the sheet-like (film-like) or plate-like non-permeable substrate.

A thickness of the non-permeable substrate is preferably 0.1 $\mu$m to 1,000 $\mu$m, more preferably 0.1 $\mu$m to 800 $\mu$m, and still more preferably 1 $\mu$m to 500 $\mu$m.

The non-permeable substrate may be subjected to a hydrophilization treatment. Examples of the hydrophilization treatment include a corona treatment, a plasma treatment, a flame treatment, a heat treatment, an abrasion treatment, a light irradiation treatment (such as an UV treatment), and a flame treatment, but the hydrophilization treatment is not limited thereto. The corona treatment can be performed, for example, using CORONA MASTER (product name "PS-10S", manufactured by Shinko Electric & Instrumentation Co., Ltd.). Conditions for the corona treatment may be appropriately selected according to the type and the like of the non-permeable substrate.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image non-recorded surface side of the non-permeable substrate.

For example, in a case where the non-permeable substrate is a non-permeable substrate having transparency, it is preferable to use a color ink as the first ink described later and to use a white ink as the second ink described later. In a case where the pretreatment liquid, the first ink, and the second ink are applied in this order onto the non-permeable substrate to record an image, a color image (for example, a pattern image such as a character and a figure) with a white image (for example, a solid image) as a background is easily viewed through the non-permeable substrate from an image non-recording surface side of the non-permeable substrate.

(Pretreatment liquid)

The pretreatment liquid contains water, a coagulating agent having a molecular weight of 1,000 or less, and a resin.

-Water-

The pretreatment liquid contains water.

A content of water can be, for example, 50% by mass to 90% by mass with respect to the total amount of the pretreatment liquid.

The content of water is preferably 50% by mass or more and more preferably 60% by mass or more with respect to the total amount of the pretreatment liquid.

The upper limit value of the content of water depends on the amount of other components, but is preferably 90% by mass or less and more preferably 80% by mass or less with respect to the total amount of the pretreatment liquid.

-Coagulating agent-

The pretreatment liquid contains at least one coagulating agent having a molecular weight of 1,000 or less.

The coagulating agent in the pretreatment liquid coagulates components in the first ink and in the second ink on the non-permeable substrate. As a result, image quality of the image can be improved.

The coagulating agent is not particularly limited as long as it is a compound having a molecular weight of 1,000 or less. The molecular weight can be calculated from the type and the number of atoms constituting the compound.

It is preferable that the coagulating agent is at least one selected from the group consisting of an organic acid, a polyvalent metal compound, and a metal complex.

Preferred examples of the coagulating agent also include coagulating agents described in paragraphs 0122 to 0129 of WO2020/195360A.

Hereinafter, preferred aspects of each of the organic acid, the polyvalent metal compound, and the metal complex, which can be used as the coagulating agent, will be described.

--Organic acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the coagulating rate of the ink, as the acidic group, a phosphoric acid group or a carboxy group is preferable, and a carboxy group is more preferable.

It is preferable that at least a part of the acidic group is dissociated in the pretreatment liquid.

Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of coagulating rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent metal compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counter-ions in the pretreatment liquid.

--Metal complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

-Resin-

The pretreatment liquid contains at least one resin.

The resin in the pretreatment liquid contributes to film-forming properties of the pretreatment liquid (that is, formability of the pretreatment liquid film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 $\mu$l, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

From the viewpoint of temporal stability of the pretreatment liquid, it is preferable that the resin in the pretreatment liquid is present in a particulate form. That is, it is preferable that the resin in the pretreatment liquid is resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

For the resin particles, for example, descriptions described in paragraphs 0038 to 0114 of WO2021/192720A and paragraphs 0109 to 0120 of JP2015-25076A may be referred to.

-Water-soluble organic solvent-

The pretreatment liquid may contain at least one water-soluble organic solvent.

In the present disclosure, "water-soluble" in the "water-soluble organic solvent" means a property of being dissolved in 1 g or more in 100 g of water at 25°C.

The type of the water-soluble organic solvent is not limited, and examples thereof include monoalcohols having 1 to 4 carbon atoms;

diols such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triols such as glycerin, 1,2,6-hexanetriol, and trimethylolpropane;
alkylene glycols such as ethylene glycol and propylene glycol;
alkylene glycol monoalkyl ethers such as ethylene glycol monoalkyl ether and propylene glycol monoalkyl ether;
polyalkylene glycols such as diethylene glycol, triethylene glycol, tetraethylene glycol, pentaethylene glycol, dipropylene glycol, and polyoxyethylene polyoxypropylene glycol;
polyalkylene glycol ethers such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

From the viewpoint of drying properties and temporal stability of the pretreatment liquid, it is preferable that the water-soluble organic solvent in the pretreatment liquid includes at least one selected from the group consisting of alkylene glycol and alkylene glycol monoalkyl ether.

A content of the water-soluble organic solvent is preferably 1% by mass to 20% by mass and more preferably 2% by mass to 10% by mass with respect to the total amount of the pretreatment liquid.

-Additive-

The pretreatment liquid may contain an additive such as a surfactant, a water-soluble resin, a co-sensitizer, an ultraviolet absorbing agent, an antioxidant, a fading inhibitor, a conductive salt, and a basic compound, as necessary.

-Physical properties-

A pH of the pretreatment liquid is preferably 2.0 to 7.0 and more preferably 2.0 to 4.0.

The pH is measured at 25°C using a pH meter, for example, product name "WM-50EG" manufactured by DDK-Toa Corporation.

From the viewpoint of coating properties of the pretreatment liquid, a viscosity of the pretreatment liquid is preferably 0.5 mPa·s to 10 mPa·s and more preferably 1 mPa·s to 5 mPa·s.

The viscosity is measured at 25°C using a viscometer, for example, a TV-22 type viscometer manufactured by Toki Sangyo Co., Ltd.

A surface tension of the pretreatment liquid is preferably 60 mN/m or less, more preferably 20 mN/m to 50 mN/m, and still more preferably 30 mN/m to 45 mN/m.

The surface tension is measured at 25°C using a surface tension meter, for example, by a plate method using an automatic surface tension meter (product name "CBVP-Z") manufactured by Kyowa Interface Science Co., Ltd.

(Method of applying pretreatment liquid)

A method of applying the pretreatment liquid is not particularly limited, and examples thereof include known methods such as a coating method, a dipping method, and an ink jet recording system.

Examples of the coating method include known coating methods using a bar coater, an extrusion die coater, an air doctor coater, a blade coater, a rod coater, a knife coater, a squeeze coater, a reverse roll coater, or the like.

In the pretreatment liquid applying step, an amount of the coagulating agent applied onto the non-permeable substrate is preferably 0.03 g/m$^2$ to 0.15 g/m$^2$ and more preferably 0.06 g/m$^2$ to 0.12 g/m$^2$.

The amount of the coagulating agent applied means an application mass (g/m$^2$) per area of 1 m$^2$.

The amount of the coagulating agent applied can be calculated based on an amount (g/m$^2$) of the pretreatment liquid applied and the content (% by mass) of the coagulating agent contained in the pretreatment liquid. The amount of the coagulating agent applied can be adjusted by adjusting at least one of the amount of the pretreatment liquid applied or the content of the coagulating agent contained in the pretreatment liquid.

In a case where the amount of the coagulating agent applied is 0.03 g/m$^2$ or more, the effect of aggregating the components contained in the first ink and the second ink is high, and the image quality of the obtained image is excellent. On the other hand, in a case where the amount of the coagulating agent applied is 0.15 g/m$^2$ or less, the scattering of the coagulating agent is suppressed, and the continuous jetting property of the second ink is improved.

<Pretreatment liquid drying step>

In the pretreatment liquid drying step, the pretreatment liquid is dried.

A method for drying the pretreatment liquid is not particularly limited, and examples thereof include infrared (IR) drying, blast drying (for example, a dryer and the like), and heating and drying with a heating device (for example, a heater, a hot plate, a heating furnace, and the like). Two or more of these drying methods may be combined.

As described above, in the pretreatment liquid drying step, it is preferable that the pretreatment liquid is dried under drying conditions of a wind speed of $V^p$ meters/sec, a drying temperature of $T^p$°C, and a drying time of $t^p$ seconds, and V, T, t, M, P, $V^p$, $T^p$, and $t^p$ satisfy the expression (3).

The wind speed is preferably more than 0 meters/sec, that is, the drying method of the pretreatment liquid is preferably blast drying. The pretreatment liquid can be blown by, for example, a blower. The wind sent from the blower may be cold air or hot air.

Preferred aspects of the wind speed, the drying temperature, and the drying time in the pretreatment liquid drying step are as described above.

<First ink applying step>

In the first ink applying step, the first ink containing water and a colorant is applied onto the non-permeable substrate onto which the pretreatment liquid has been applied by an ink jet recording system.

-Water-

The first ink contains water.

A content of water can be, for example, 10% by mass to 99% by mass with respect to the total amount of the first ink.

The content of the water is preferably 10% by mass or more, more preferably 20% by mass or more, still more preferably 30% by mass or more, and particularly preferably 50% by mass or more with respect to the total amount of the first ink.

The upper limit value of the content of water depends on the amount of other components, but is, for example, 99% by mass, preferably 95% by mass and more preferably 90% by mass with respect to the total amount of the first ink.

-Pigment-

The first ink contains a colorant.

It is preferable that one of the first ink or the second ink is a white ink exhibiting a white color, and the other is a colored ink exhibiting a color other than white. That is, it is preferable that one of the first ink or the second ink contains a white pigment and the other contains a pigment other than the white pigment.

A commercially available organic pigment or inorganic pigment may be used as the pigment.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

Examples of the white pigment include inorganic pigments such as titanium dioxide, barium sulfate, calcium carbonate, silica, zinc oxide, zinc sulfide, mica, talc, and pearl.

The white pigment is preferably titanium dioxide, barium sulfate, calcium carbonate, or zinc oxide, and more preferably titanium dioxide.

From the viewpoint of covering property, an average primary particle diameter of the white pigment is preferably 150 nm or more, and more preferably 200 nm or more. In addition, from the viewpoint of jetting property of the ink, the average primary particle diameter of the white pigment is preferably 400 nm or less, and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.

In addition, the pigment may be a water-insoluble pigment which can be dispersed in water by a dispersing agent, or may be a self-dispersing pigment.

The self-dispersing pigment is a pigment which can be dispersed in water without using a dispersing agent.

The self-dispersing pigment is, for example, a compound in which at least one selected from the group consisting of a hydrophilic group such as a carbonyl group, a hydroxy group, a carboxy group, a sulfo group, and a phosphoric acid group and salts thereof is chemically bonded to a surface of the pigment directly or through another group.

In a case where the first ink contains the white pigment, from the viewpoint of image density and jetting property, a content of the white pigment is preferably 2% by mass to 25% by mass, more preferably 5% by mass to 25% by mass, and still more preferably 10% by mass to 20% by mass with respect to the total amount of the first ink.

In a case where the ink contains a pigment other than the white pigment, from the viewpoint of image density and jetting property, a content of the pigment is preferably 1% by mass to 20% by mass, more preferably 1% by mass to 15% by mass, and still more preferably 1% by mass to 10% by mass with respect to the total amount of the first ink.

-Resin-

It is preferable that the first ink contains at least one resin.

The resin in the first ink contributes to film-forming properties of the ink (that is, formability of the ink film).

A weight-average molecular weight (Mw) of the resin is preferably 1,000 to 300,000, more preferably 2,000 to 200,000, and still more preferably 5,000 to 100,000.

Examples of the resin include a pigment dispersing resin as a dispersing agent.

Examples of the resin also include resin particles.

In a case where the first ink contains a pigment as the colorant, the first ink preferably contains at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The first ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the first ink contains the pigment dispersing resin, a ratio of a content of the pigment and a content of the pigment dispersing resin in the first ink is preferably 1:0.04 to 1:3, more preferably 1:0.05 to 1:1, and still more preferably 1:0.05 to 1:0.5 on a mass basis.

In a case where the first ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the first ink.

From the viewpoint of blocking resistance, it is preferable that the first ink contains at least one kind of resin particles. Examples of the resin particles which may be contained in the first ink include the same particles as the resin particles which may be contained in the pretreatment liquid.

A content of the resin particles is preferably 1% by mass to 20% by mass, more preferably 2% by mass to 15% by mass, and still more preferably 2% by mass to 10% by mass with respect to the total amount of the first ink.

-Water-soluble organic solvent-

It is preferable that the first ink contains at least one water-soluble organic solvent.

In this manner, the jetting stability from the ink jet head can be further ensured.

Examples of the water-soluble organic solvent in the first ink include the same solvents as the water-soluble organic solvents which may be contained in the pretreatment liquid.

A content of the water-soluble organic solvent is preferably 10% by mass to 40% by mass and more preferably 15% by mass to 30% by mass with respect to the total amount of the first ink.

-Additive-

The first ink may contain an additive such as a surfactant, a water-soluble resin, a co-sensitizer, an ultraviolet absorbing agent, an antioxidant, a fading inhibitor, a conductive salt, and a basic compound, as necessary.

-Physical properties-

From the viewpoint of improving the jetting stability, a pH (25°C) of the first ink is preferably 7 to 10 and more preferably 7.5 to 9.5. The pH of the first ink can be measured by the same method as that for the pH of the pretreatment liquid.

A viscosity (25°C) of the first ink is preferably 0.5 mPa·s to 30 mPa·s, more preferably 2 mPa·s to 20 mPa·s, preferably 2 mPa·s to 15 mPa·s, and even more preferably 3 mPa·s to 10 mPa·s.

The viscosity of the first ink can be measured by the same method as that for the viscosity of the pretreatment liquid.

A surface tension (25°C) of the ink is preferably 60 mN/m or less, more preferably 20 mN/m to 50 mN/m, and still more preferably 25 mN/m to 40 mN/m.

The surface tension of the first ink can be measured by the same method as that for the surface tension of the pretreatment liquid.

(Method of applying ink)

The application of the first ink is performed by an ink jet recording system.

An ejection method of the ink in the ink jet recording system is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording system, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording system, a method described in paragraphs 0093 to 0105 of JP2003-306623A can also be applied.

The application of the ink onto the non-permeable substrate by the ink jet recording system can be performed by allowing the ink to be jetted from a nozzle of an ink jet head.

The way of using the ink jet head also includes a shuttle method of performing recording while a short serial head is allowed to scan in the width direction of the non-permeable substrate, and a line method of using a line head in which recording elements are arranged correspondingly to the entire range of one side of the non-permeable substrate.

By the line method, an image can be recorded on the entire surface of the non-permeable substrate by scanning the non-permeable substrate in a direction orthogonal to a direction in which the recording elements are arranged. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the non-permeable substrate moves. Therefore, according to the line method, an increase in the recording speed of an image is achieved as compared with the shuttle method.

The first ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining an image with high definition, a droplet amount of the first ink is preferably 1 picoliter (pL) to 10 pL and more preferably 1.5 pL to 6 pL.

<First ink drying step>

In the first ink drying step, the first ink is dried under drying conditions of a wind speed of V meters/sec, a drying temperature of T°C, and a drying time of t seconds.

The wind speed is preferably more than 0 meters/sec, that is, the drying method of the first ink is preferably blast drying. The first ink can be blown by, for example, a blower. The wind sent from the blower may be cold air or hot air.

Preferred aspects of the wind speed, the drying temperature, and the drying time in the first ink drying step are as described above.

<Second ink applying step>

In the second ink applying step, the second ink containing water and a colorant is applied onto the non-permeable substrate onto which the pretreatment liquid and the first ink have been applied.

Preferred aspects of the components contained in the second ink are the same as the preferred aspects of the components contained in the first ink.

A method of applying the second ink is the same as the method of applying the first ink.

The ink jet recording method according to the present disclosure may include other steps in addition to the pretreatment liquid applying step, the pretreatment drying step, the first ink applying step, the first ink drying step, and the second ink applying step.

It is preferable that the ink jet recording method according to the present disclosure includes a step of drying the second ink after the second ink applying step. A method for drying the second ink is not particularly limited, but it is preferable to dry the second ink under the same conditions as those for the first ink.

Examples

Hereinafter, the present invention will be described more specifically with reference to examples, but the present invention is not limited to the following examples.

<Preparation of pretreatment liquid>

Each component shown in Table 1 was mixed to prepare a pretreatment liquid.

Details of each component in Table 1 are as follows. In Table 1, a content of the resin 1 to the resin 3 means a content of the resin which is a solid content in the aqueous dispersion liquid as a product.

· Glutamic acid

· Ca acetate: calcium acetate

· Resin 1: aqueous dispersion liquid of acrylic resin (product name "MOVINYL 6770", manufactured by Japan Coating Resin Co., Ltd.)

· Resin 2: aqueous dispersion liquid of styrene acrylic resin (product name "HIROSE QE-1042", manufactured by Seiko PMC Corporation)

· Resin 3: aqueous dispersion liquid of urethane resin (product name "SUPERFLEX 500M", manufactured by DKS Co., Ltd.)

· PGmME: propylene glycol monomethyl ether

· Antifoaming agent: product name "BYK-024", manufactured by BYK

· Dimethylaminoethanol

· Silicone-based surfactant: product name "BYK-347", manufactured by BYK

[Table 1]

| | Pretreatment liquid 1 | Pretreatment liquid 2 | Pretreatment liquid 3 | Pretreatment liquid 4 | Pretreatment liquid 5 | Pretreatment liquid 6 | Pretreatment liquid 7 | Pretreatment liquid 8 |
|---|---|---|---|---|---|---|---|---|
| Glutamic acid | 10 | 10 | 5 | 2 | 10 | 10 | 10 | - |
| Calcium acetate | - | - | - | - | - | - | - | 10 |
| Resin 1 | 10 | 5 | 10 | 10 | 2 | - | - | 10 |
| Resin 2 | - | - | - | - | - | 10 | - | - |
| Resin 3 | - | - | - | - | - | - | 10 | - |
| PGmME | 5 | 5 | 5 | 5 | 5 | 5 | 5 | 5 |
| Antifoaming agent | 0.01 | 0.01 | 0.01 | 0.01 | 0.01 | 0.01 | 0.01 | 0.01 |
| Dimethylaminoethanol | 0.1 | 0.1 | 0.1 | 0.1 | 0.1 | 0.1 | 0.1 | 0.1 |
| Silicone-based surfactant | 0.1 | 0.1 | 0.1 | 0.1 | 0.1 | 0.1 | 0.1 | 0.1 |
| Water | 74.79 | 79.79 | 79.79 | 82.79 | 82.79 | 74.79 | 74.79 | 74.79 |
| Total | 100 | 100 | 100 | 100 | 100 | 100 | 100 | 100 |

16

<Preparation of first ink and second ink>

A first ink was prepared by mixing the respective components shown in Table 2.
A second ink was prepared by preparing a white pigment dispersion liquid 1 in advance and then mixing the white pigment dispersion liquid 1 with other components (components other than a white pigment and a pigment dispersing resin 1 shown in Table 2).
Details of each component in Table 2 are as follows. In Table 2, a content of the resin 4 means a content of the resin which is a solid content in the aqueous dispersion liquid as a product.
The same components as the components contained in the pretreatment liquid will not be described.

· Black pigment dispersion liquid: product name "Projet Black APD4000", manufactured by FUJIFILM Imaging Colorants, pigment concentration: 15% by mass
· White pigment: titanium dioxide pigment (product name "PF-690", manufactured by Ishihara Sangyo Kasha, Ltd., average primary particle diameter: 210 nm)
· Pigment dispersing resin 1: resin synthesized by a method described later
· PG: 1,2-propanediol
· Acetylene glycol-based surfactant: product name "OLFINE E1010", manufactured by Nissin Chemical Co., Ltd.·
Silica particles: colloidal silica (product name "SNOWTEX XS", manufactured by Nissan Chemical Corporation)
· Resin 4: aqueous dispersion liquid of urethane resin (product name "PERMARIN UA-200", manufactured by SANYO CHEMICAL INDUSTRIES, LTD.)

(Synthesis of pigment dispersing resin 1)

100 g of dipropylene glycol was charged into a three-neck flask provided with a stirrer and a cooling pipe, and heated to 85°C in a nitrogen atmosphere.
A solution 1 obtained by mixing 14.0 g of stearyl methacrylate, 35.3 g of benzyl methacrylate, 20.0 g of hydroxyethyl methacrylate, 30.7 g of methacrylic acid, and 0.55 g of 2-mercaptopropionic acid and a solution 2 obtained by dissolving 1.0 g of t-butylperoxy-2-ethylhexanoate (product name "Perbutyl O", manufactured by NOF Corporation) in 20 g of dipropylene glycol were respectively prepared.
The solution 1 was added dropwise to the above-described three-neck flask over 4 hours, and the solution 2 was added dropwise thereto over 5 hours.
After the completion of the dropwise addition, the resulting solution was allowed to further react for 2 hours, heated to 95°C, and heated and stirred for 3 hours, so that all unreacted monomers were allowed to react. Disappearance of the monomers was confirmed by a nuclear magnetic resonance ($^1$H-NMR) method.
The obtained reaction solution was heated to 70°C, 12.0 g of dimethylethanolamine was added thereto, propylene glycol was added thereto, and the resulting solution was stirred, thereby obtaining a 30% by mass solution of the pigment dispersing resin 1.
Structural units of the obtained pigment dispersing resin 1 were confirmed by $^1$H-NMR. In addition, a weight-average molecular weight (Mw) determined by GPC was 28,000.
A mass ratio of respective structural units in the pigment dispersing resin 1 was structural unit derived from stearyl methacrylate/structural unit derived from benzyl methacrylate/structural unit derived from hydroxyethyl methacrylate/structural unit derived from methacrylic acid = 14/35.3/20/30.7. Here, the above-described mass ratio was a value not including dimethylaminoethanol.
An acid value of the pigment dispersing resin 1 was 200 mgKOH/g.

(Preparation of white pigment dispersion liquid 1)

A pigment dispersion liquid 1 was prepared using a Lady Mill model LSG-4U-08 (manufactured by Aimex Co., Ltd.).
45 parts by mass of a titanium dioxide pigment (average primary particle diameter: 210 nm, trade name "PF-690", manufactured by Ishihara Sangyo Kasha, Ltd.) as a white pigment, 15 parts by mass of a 30% by mass solution of the pigment dispersing resin 1, and 40 parts by mass of ultrapure water were charged into a zirconia container. Furthermore, 40 parts by mass of 0.5 mmφ zirconia beads (Torayceram beads manufactured by Toray Industries, Inc.) were added thereto, and the mixture was mixed gently using a spatula. The zirconia container containing the obtained mixture was put into the Lady mill, and dispersed at a rotation speed of 1,000 rpm (revolutions per minute) for 5 hours. After the dispersion was completed, the beads were removed by filtration with a gauze, thereby obtaining a white pigment dispersion liquid 1 in which a concentration of the white pigment was 45% by mass.

[Table 2]

|  | First ink | Second ink |
|---|---|---|
| Black pigment dispersion liquid | 6 | - |
| White pigment | - | 15 |
| Pigment dispersing resin 1 | - | 1.5 |
| PG | 20 | 15 |
| PGmME | 2 | 5 |
| Acetylene glycol-based surfactant | 0.5 | 0.5 |
| Silicone-based surfactant | 0.5 | 0.5 |
| Silica particles | 0.05 | 0.05 |
| Resin 4 | 4 | 4 |
| Water | 67.0 | 58.5 |
| Total | 100 | 100 |

<Image recording>

An ink jet recording device including a transport system for continuously transporting a long substrate, a flexographic printing machine for coating the substrate with a pretreatment liquid, a hot air dryer for drying the pretreatment liquid, a first ink jet head for applying the first ink, a first hot air dryer for drying the first ink, a second ink jet head for applying the second ink, and a second hot air dryer for drying the second ink was prepared.

In addition, as the substrate, a polyethylene terephthalate (PET) substrate as a non-permeable substrate ("FE2001" manufactured by Futamura Chemical Co., Ltd.; thickness: 12 $\mu$m, width: 780 mm, length: 4,000 m; hereinafter, referred to as "non-permeable substrate A")) was prepared.

Using the ink jet recording device, the non-permeable substrate A was continuously transported at 50 m/min, and the pretreatment liquid was applied onto the non-permeable substrate A with the flexographic printing machine such that the amount of the coagulating agent applied was the value shown in Table 3 (pretreatment liquid applying step). Next, the pretreatment liquid was dried under the drying conditions shown in Table 3 (wind speed $V^p$, drying temperature $T^p$, and drying time $t^p$) (pretreatment liquid drying step).

The first ink was jetted from the first ink jet head and applied in a solid image shape onto the surface of the non-permeable substrate A, onto which the pretreatment liquid had been applied (first ink applying step). The applied first ink was dried under the drying conditions shown in Table 3 (wind speed V, drying temperature T, and drying time t) (first ink drying step). Thereafter, the second ink was jetted from the ink jet head and applied in a solid image shape onto the first ink (second ink applying step). The applied second ink was dried at a drying temperature of 80°C and a wind speed of 10 m/s for 5 seconds to obtain an image recorded material (second ink drying step).

In the above-described image recording, continuous jetting property of the second ink was evaluated. In addition, blocking resistance and image quality were evaluated using the obtained image recorded material. The evaluation methods were as follows.

[Continuous jetting property]

The above-described image recording was performed for 10 minutes (corresponding to 500 meters of the non-permeable substrate A), and the number T0 of streaks in the solid image at the start of jetting of the second ink and the number T1 of streaks in the solid image at the time of jetting after 10 minutes were visually observed. The continuous jetting property was evaluated based on the increase in the number T1 with respect to the number T0. The evaluation method was as follows.

5: increase in the number was 0 to 5.
4: increase in the number was 6 to 10.
3: increase in the number was 11 to 20.
2: increase in the number was 21 to 30.
1: increase in the number was 31 or more.

[Blocking resistance]

After the above-described image recording, the non-permeable substrate A was wound using a winding device. The wound substrate was allowed to stand for one day. After one day, the substrate was unwound using an unwinding device. The presence or absence of blocking on a back surface of the non-permeable substrate A was visually observed. Specifically, the blocking means a phenomenon in which substrates adhere to each other. On the image recording surface of the non-permeable substrate A, having a width of 70 cm and a length of 70 cm, an area where the blocking was observed was calculated. The evaluation standard was as follows.

5: blocking was not observed.
4: blocking was observed in an area of 5% or less of the image recording surface.
3: blocking was observed in an area of more than 5% and 20% or less of the image recording surface.
2: blocking was observed in an area of more than 20% and 40% or less of the image recording surface.
1: blocking was observed in an area of more than 40% of the image recording surface.

[Image quality]

An image recorded material in which a character image was recorded on the non-permeable substrate A was obtained by the same method as that for the image recording described above. The character (Unicode: U+9DF9) shown in Fig. 1 was output in sizes of 4 pt, 6 pt, 8 pt, and 10 pt as the character image. Here, pt means the DTP point representing the font size, and 1 pt is 1/72 inch.

The image quality (character quality) was evaluated by observing each character image on the image recorded material and determining whether or not the image was reproducible. The "reproducible" means that a horizontal line indicated by the reference numeral 11 in Fig. 1 and a horizontal line indicated by the reference numeral 12 in Fig. 1 are separated from each other in the character image of Fig. 1 as confirmed at a position separated by 0.5 m. The evaluation standard was as follows.

5: characters having a font size of 4 pt were reproducible.
4: characters having a font size of 6 pt were reproducible, but characters having a font size of 4 pt were not reproducible.
3: characters having a font size of 8 pt were reproducible, but characters having a font size of 6 pt or less were not reproducible.
2: characters having a font size of 10 pt were reproducible, but characters having a font size of 8 pt or less were not reproducible.
1: characters having a font size of 10 pt were not reproducible.

The evaluation results are shown in Table 3. In Table 3, "Expression (1)" indicates "$50V + TtM/P$" which is a calculation formula related to the expression (1). "Expression (3)" indicates "$20V^P + 50V + (Tt + T^P t^P)M/P$" which is a calculation formula related to the expression (3). "Expression (4)" indicates "$(50V + TtM/P)/S$" which is a calculation formula related to the expression (4). "Expression (5)" means "$(T - Tg)t$" which is a calculation formula related to the expression (4).

[Table 3]

| | Pretreatment liquid applying step | | | | | | Pretreatment liquid drying step | | | First ink drying step | | | Non-permeable substrate | Expression (1) | Expression (3) | Expression (4) | Expression (5) | Evaluation | | |
| | Coagulating agent | | | Resin | | | Drying conditions | | | Drying conditions | | | | | | | | | | |
| | Type | Content (% by mass) | Applied amount (g/m²) | Type | Content (% by mass) | Tg (°C) | Wind speed $V^p$ (m/s) | Drying temperature $T^p$ (°C) | Drying time $t^p$ (sec) | Wind speed V (m/s) | Drying temperature T (°C) | Drying time t (sec) | Tension S (mN/m) | | | | | Continuous jetting property | Blocking resistance | Image quality |
| Example 1 | Glutamic acid | 10 | 0.08 | Resin 1 | 10 | 0 | 10 | 60 | 0.5 | 10 | 80 | 5 | 70 | 900 | 1130 | 13 | 400 | 5 | 3 | 5 |
| Example 2 | Glutamic acid | 10 | 0.08 | Resin 1 | 10 | 0 | 10 | 60 | 0.5 | 50 | 80 | 5 | 70 | 2900 | 3130 | 41 | 400 | 5 | 5 | 5 |
| Example 3 | Glutamic acid | 10 | 0.08 | Resin 1 | 10 | 0 | 10 | 60 | 1 | 10 | 60 | 10 | 70 | 1100 | 1360 | 16 | 600 | 5 | 4 | 5 |
| Example 4 | Glutamic acid | 10 | 0.08 | Resin 1 | 10 | 0 | 10 | 60 | 1 | 10 | 80 | 10 | 70 | 1300 | 1560 | 19 | 800 | 5 | 5 | 5 |
| Example 5 | Glutamic acid | 10 | 0.08 | Resin 1 | 10 | 0 | 10 | 60 | 1 | 20 | 80 | 10 | 70 | 1800 | 2060 | 26 | 800 | 5 | 5 | 5 |
| Example 6 | Glutamic acid | 10 | 0.08 | Resin 1 | 10 | 0 | 10 | 60 | 1 | 50 | 80 | 10 | 70 | 3300 | 3560 | 47 | 800 | 3 | 5 | 5 |
| Example 7 | Glutamic acid | 10 | 0.08 | Resin 1 | 10 | 0 | 10 | 60 | 1.5 | 10 | 80 | 15 | 70 | 1700 | 1990 | 24 | 1200 | 5 | 5 | 5 |
| Example 8 | Glutamic acid | 10 | 0.08 | Resin 1 | 5 | 0 | 10 | 60 | 0.5 | 10 | 80 | 5 | 70 | 1300 | 1560 | 19 | 400 | 5 | 5 | 5 |
| Example 9 | Glutamic acid | 10 | 0.08 | Resin 1 | 5 | 0 | 10 | 60 | 1 | 10 | 80 | 10 | 70 | 2100 | 2420 | 30 | 800 | 5 | 5 | 5 |
| Example 10 | Glutamic acid | 10 | 0.08 | Resin 1 | 5 | 0 | 10 | 60 | 1 | 30 | 80 | 10 | 70 | 3100 | 3420 | 44 | 800 | 4 | 5 | 5 |
| Example 11 | Glutamic acid | 5 | 0.07 | Resin 1 | 10 | 0 | 10 | 60 | 1 | 10 | 80 | 10 | 70 | 900 | 1130 | 13 | 800 | 5 | 3 | 5 |
| Example 12 | Glutamic acid | 5 | 0.07 | Resin 1 | 10 | 0 | 10 | 60 | 1.5 | 10 | 80 | 15 | 70 | 1100 | 1345 | 16 | 1200 | 5 | 4 | 5 |
| Example 13 | Glutamic acid | 10 | 0.08 | Resin 1 | 10 | 0 | 10 | 80 | 1 | 10 | 60 | 10 | 70 | 1100 | 1380 | 16 | 600 | 5 | 4 | 5 |
| Example 14 | Glutamic acid | 10 | 0.08 | Resin 1 | 10 | 0 | 20 | 60 | 1 | 10 | 60 | 10 | 70 | 1100 | 1560 | 16 | 600 | 5 | 5 | 5 |
| Example 15 | Glutamic acid | 10 | 0.08 | Resin 1 | 10 | 0 | 20 | 80 | 1 | 10 | 60 | 10 | 70 | 1100 | 1580 | 16 | 600 | 5 | 5 | 5 |
| Example 16 | Glutamic acid | 10 | 0.08 | Resin 1 | 5 | 0 | 20 | 80 | 1 | 30 | 80 | 10 | 70 | 3100 | 3660 | 44 | 800 | 3 | 5 | 5 |
| Example 17 | Glutamic acid | 10 | 0.08 | Resin 1 | 10 | 0 | 20 | 60 | 1 | 10 | 60 | 10 | 100 | 1100 | 1560 | 11 | 600 | 5 | 5 | 5 |
| Example 18 | Glutamic acid | 10 | 0.08 | Resin 1 | 5 | 0 | 10 | 60 | 1 | 10 | 80 | 10 | 40 | 2100 | 2420 | 53 | 800 | 4 | 5 | 5 |
| Example 19 | Glutamic acid | 5 | 0.02 | Resin 1 | 10 | 0 | 10 | 60 | 0.5 | 50 | 80 | 5 | 70 | 2700 | 2915 | 39 | 400 | 5 | 5 | 3 |
| Example 20 | Glutamic acid | 10 | 0.16 | Resin 1 | 10 | 0 | 10 | 60 | 0.5 | 50 | 80 | 5 | 70 | 2900 | 3130 | 41 | 400 | 5 | 3 | 5 |
| Example 21 | Glutamic acid | 10 | 0.08 | Resin 1 | 10 | 53 | 10 | 60 | 0.5 | 50 | 80 | 5 | 70 | 2900 | 3130 | 41 | 135 | 4 | 5 | 5 |
| Example 22 | Glutamic acid | 10 | 0.08 | Resin 1 | 10 | -39 | 10 | 60 | 1.5 | 10 | 80 | 15 | 70 | 1700 | 1990 | 24 | 1785 | 5 | 4 | 5 |
| Example 23 | Ca acetate | 10 | 0.06 | Resin 1 | 10 | 0 | 10 | 60 | 1 | 10 | 60 | 10 | 70 | 1100 | 1360 | 16 | 600 | 5 | 4 | 5 |
| Example 24 | Ca acetate | 10 | 0.06 | Resin 1 | 10 | 0 | 10 | 60 | 1 | 10 | 80 | 10 | 70 | 1300 | 1560 | 19 | 800 | 5 | 5 | 5 |
| Example 25 | Glutamic acid | 10 | 0.08 | Resin 1 | 5 | 0 | 10 | 60 | 1 | 10 | 120 | 10 | 70 | 2900 | 3220 | 41 | 1200 | 5 | 5 | 5 |
| Example 26 | Glutamic acid | 10 | 0.08 | Resin 1 | 5 | 0 | 10 | 60 | 1 | 10 | 100 | 10 | 70 | 2500 | 2820 | 36 | 1000 | 5 | 5 | 5 |
| Example 27 | Glutamic acid | 10 | 0.08 | Resin 1 | 5 | 0 | 10 | 60 | 1 | 10 | 60 | 10 | 70 | 1700 | 2020 | 24 | 600 | 5 | 5 | 5 |
| Example 28 | Glutamic acid | 10 | 0.08 | Resin 1 | 5 | 0 | 10 | 60 | 1 | 10 | 40 | 10 | 70 | 1300 | 1620 | 19 | 400 | 5 | 5 | 5 |
| Example 29 | Glutamic acid | 10 | 0.08 | Resin 1 | 5 | 0 | 10 | 60 | 1 | 10 | 25 | 10 | 70 | 1000 | 1320 | 14 | 250 | 5 | 3 | 5 |
| Example 30 | Glutamic acid | 10 | 0.08 | Resin 1 | 5 | 0 | 10 | 60 | 2.5 | 10 | 60 | 25 | 70 | 2000 | 2350 | 29 | 1500 | 5 | 5 | 5 |
| Example 31 | Glutamic acid | 10 | 0.08 | Resin 1 | 10 | 0 | 10 | 60 | 4 | 10 | 60 | 40 | 70 | 2900 | 3340 | 41 | 2400 | 5 | 4 | 5 |
| Example 32 | Glutamic acid | 2 | 0.06 | Resin 1 | 10 | 0 | 10 | 60 | 1 | 20 | 80 | 10 | 70 | 1160 | 1372 | 17 | 800 | 5 | 4 | 5 |
| Example 33 | Glutamic acid | 10 | 0.08 | Resin 1 | 2 | 0 | 10 | 60 | 0.5 | 10 | 80 | 5 | 70 | 2500 | 2850 | 36 | 400 | 5 | 5 | 5 |
| Comparative Example 1 | Glutamic acid | 10 | 0.08 | Resin 1 | 10 | 0 | 10 | 60 | 1.5 | 50 | 80 | 15 | 70 | 3700 | 3990 | 53 | 1200 | 1 | 5 | 5 |
| Comparative Example 2 | Glutamic acid | 10 | 0.08 | Resin 1 | 5 | 0 | 10 | 60 | 1 | 40 | 80 | 10 | 70 | 3600 | 3920 | 51 | 800 | 1 | 5 | 5 |
| Comparative Example 3 | Glutamic acid | 10 | 0.08 | Resin 1 | 5 | 0 | 10 | 60 | 1.5 | 40 | 80 | 15 | 70 | 4400 | 4780 | 63 | 1200 | 1 | 5 | 5 |
| Comparative Example 4 | Glutamic acid | 5 | 0.07 | Resin 1 | 10 | 0 | 10 | 60 | 0.4 | 10 | 80 | 4 | 70 | 660 | 872 | 9 | 320 | 5 | 1 | 5 |
| Comparative Example 5 | Ca acetate | 10 | 0.06 | Resin 1 | 5 | 0 | 10 | 60 | 1 | 40 | 80 | 10 | 70 | 3600 | 3920 | 51 | 800 | 1 | 5 | 5 |
| Comparative Example 6 | Ca acetate | 5 | 0.05 | Resin 1 | 10 | 0 | 10 | 60 | 0.4 | 10 | 80 | 4 | 70 | 660 | 872 | 9 | 320 | 5 | 1 | 5 |

As shown in Table 3, in Examples 1 to 33, it was found that, since V, T, t, M, and P satisfy the expression (1) and the expression (2), the continuous jetting property of the ink was excellent and an image having excellent blocking resistance could be recorded.

On the other hand, in Comparative Examples 1 to 3 and 5, it was found that the continuous jetting property of the ink was deteriorated because V, T, t, M, and P did not satisfy the expression (1). In addition, in Comparative Examples 4 and 6, it was found that the blocking resistance of the image was deteriorated because V, T, t, M, and P did not satisfy the expression (1).

In Example 2, since V, T, t, M, and P satisfied the expression (1A), it was found that the continuous jetting property of the ink was excellent as compared with Example 10. In addition, in Example 3, since V, T, t, M, and P satisfy the expression (1A), it was found that the blocking resistance of the image was excellent as compared with Example 1.

In Example 2, since V, T, t, M, P, $V^p$, $T^p$, and $t^p$ satisfy the expression (3), it was found that the continuous jetting property of the ink was excellent as compared with Examples 6 and 16. In addition, in Example 4, since V, T, t, M, P, $V^p$, $T^p$, and $t^p$ satisfy the expression (3), it was found that the blocking resistance of the image was excellent as compared with Examples 3, 12, 13, 23, and 32.

In Example 2, since V, T, t, M, P, and S satisfied the expression (4), it was found that the continuous jetting property of the ink was excellent as compared with Example 18. In addition, in Example 4, since V, T, t, M, P, and S satisfy the expression (4), it was found that the blocking resistance of the image was excellent as compared with Example 17.

In Example 2, since the amount of the coagulating agent applied onto the non-permeable substrate was 0.03 g/m$^2$ or more, it was found that the image quality was excellent as compared with Example 19. In addition, in Example 2, since the amount of the coagulating agent applied onto the non-permeable substrate was 0.15 g/m$^2$ or less, it was found that the blocking resistance of the image was excellent as compared with Example 20.

In Example 2, since T, t, and Tg satisfied the expression (5), it was found that the continuous jetting property of the ink was excellent as compared with Example 21. In addition, in Example 7, since T, t, and Tg satisfy the expression (5), it was found that the blocking resistance of the image was excellent as compared with Example 22.

The disclosure of Japanese Patent Application No. 2022-148465 filed on September 16, 2022 is incorporated in the present specification by reference. In addition, all documents, patent applications, and technical standards described in the present specification are herein incorporated by reference to the same extent that each individual document, patent application, or technical standard was specifically and individually indicated to be incorporated by reference.

**Claims**

1. An ink jet recording method comprising:

   a step of applying, onto a non-permeable substrate, a pretreatment liquid which contains water, a coagulating agent having a molecular weight of 1000 or less, and a resin;
   a step of drying the pretreatment liquid;
   a step of applying, onto the non-permeable substrate onto which the pretreatment liquid has been applied, a first ink which contains water and a colorant by an ink jet recording system;
   a step of drying the first ink under drying conditions of a wind speed of V meters/sec, a drying temperature of T°C, and a drying time of t seconds; and
   a step of applying, onto the non-permeable substrate onto which the pretreatment liquid and the first ink have been applied, a second ink containing water and a colorant by an ink jet recording system,
   wherein, in a case where a content of the coagulating agent with respect to a total amount of the pretreatment liquid is indicated by M% by mass and a content of the resin with respect to the total amount of the pretreatment liquid is indicated by P% by mass, V, T, t, M, and P satisfy the following expressions (1) and (2),

$$3500 \geq 50V + TtM/P \geq 700 \ ... \ (1),$$

$$120 \geq T \geq 25 \ ... \ (2).$$

2. The ink jet recording method according to claim 1,
   wherein V, T, t, M, and P satisfy the following expression (1A),

$$3000 \geq 50V + TtM/P \geq 1000 \ ... \ (1A).$$

3. The ink jet recording method according to claim 1 or 2,

   wherein, in the step of drying the pretreatment liquid, the pretreatment liquid is dried under drying conditions of a wind speed of $V^p$ meters/sec, a drying temperature of $T^p°C$, and a drying time of $t^p$ seconds, and V, T, t, M, P, $V^p$, $T^p$, and $t^p$ satisfy the following expression (3),

$$3500 \geq 20V^p + 50V + (Tt + T^p t^p)M/P \geq 1500 \;...\; (3).$$

4. The ink jet recording method according to claim 1 or 2,
   wherein, in a case where a tension of the non-permeable substrate is indicated by S (N/m), V, T, t, M, P, and S satisfy the following expression (4),

$$50 \geq (50V + TtM/P)/S \geq 15 \;...\; (4).$$

5. The ink jet recording method according to claim 1 or 2,
   wherein an amount of the coagulating agent applied onto the non-permeable substrate is 0.03 $g/m^2$ to 0.15 $g/m^2$.

6. The ink jet recording method according to claim 1 or 2,
   wherein, in a case where a glass transition temperature of the resin contained in the pretreatment liquid is indicated by T, t, and Tg satisfy the following expression (5),

$$1500 \geq (T - Tg)t \geq 200 \;...\; (5).$$

FIG. 1

## INTERNATIONAL SEARCH REPORT

| | International application No. |
|---|---|
| | **PCT/JP2023/033595** |

### A. CLASSIFICATION OF SUBJECT MATTER

*B41M 5/00*(2006.01)i; *B41J 2/01*(2006.01)i
FI:    B41M5/00 132; B41J2/01 123; B41J2/01 501; B41M5/00 100; B41M5/00 112

According to International Patent Classification (IPC) or to both national classification and IPC

### B. FIELDS SEARCHED

Minimum documentation searched (classification system followed by classification symbols)

B41M5/00; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-177553 A (RICOH CO., LTD.) 17 October 2019 (2019-10-17) paragraphs [0026], [0126]-[0156] | 1-6 |
| Y | JP 2015-048435 A (FUJIFILM CORP.) 16 March 2015 (2015-03-16) paragraph [0115] | 1-5 |
| Y | JP 2014-177609 A (FUJIFILM CORP.) 25 September 2014 (2014-09-25) paragraph [0267] | 1-5 |
| Y | JP 2003-213183 A (KONICA CORP.) 30 July 2003 (2003-07-30) paragraph [0043] | 4 |
| Y | JP 2019-151062 A (RICOH CO., LTD.) 12 September 2019 (2019-09-12) paragraph [0097] | 6 |
| Y | WO 2020/054289 A1 (FUJIFILM CORP.) 19 March 2020 (2020-03-19) paragraph [0140] | 6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033595**

| Patent document cited in search report | | | Publication date (day/month/year) | Patent family member(s) | | | Publication date (day/month/year) |
|---|---|---|---|---|---|---|---|
| JP | 2019-177553 | A | 17 October 2019 | US 2019/0299692 A1 paragraphs [0045], [0183]-[0303] | | | |
| JP | 2015-048435 | A | 16 March 2015 | US 2015/0064423 A1 paragraph [0330] EP 2843014 A1 | | | |
| JP | 2014-177609 | A | 25 September 2014 | (Family: none) | | | |
| JP | 2003-213183 | A | 30 July 2003 | (Family: none) | | | |
| JP | 2019-151062 | A | 12 September 2019 | (Family: none) | | | |
| WO | 2020/054289 | A1 | 19 March 2020 | US 2021/0108100 A1 paragraph [0393] EP 3851499 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019177553 A
- JP 2021004368 A
- WO 2020195360 A
- WO 2021192720 A
- JP 2002012607 A
- JP 2002188025 A
- JP 2003026978 A

- JP 2003342503 A
- WO 2021221069 A
- JP 54059936 A
- JP S5459936 A
- JP 2003306623 A
- JP 2022148465 A

**Non-patent literature cited in the description**

- **J. BRANDRUP** ; **E. H. IMMERGUT**. Polymer Handbook. Wiley-Interscience, 1989